# EUROPEAN PATENT APPLICATION

(11) **EP 4 461 444 A1**
(43) Date of publication of application: **13.11.2024**
(21) Application number: 23172377.6
(22) Date of filing: 09.05.2023
(51) Int. Cl.: B23B 47/34, B23B 25/02, B23B 29/12, B23Q 5/027, B23B 31/02

(54) **MACHINING DEVICE**

(71) Applicant: VibiCore AB, 187 67 Täby (SE)
(72) Inventor: LINDWALL, Mats, 187 67 TÄBY (SE); LIDHOLM, Svante, 184 51 ÖSTERSKÄR (SE)
(74) Representative: Groth & Co. KB

(57) **Abstract**

A machining device (1) comprising a housing (2), a spindle (4) comprising at least one bearing, a pulse shaft (11), an amplitude disc (8) coupled to the pulse shaft (11) and arranged concentric to it, the pulse shaft (11) defining an axial direction (AD), the amplitude disc (8) further comprising at least one recess (20), in which a sled (24) is arranged. The sled (24) has an irregularity (28), which comprises a concave part as seen in a plane defined by the amplitude disc (8). The machining device (1) further comprising at least one first elastic element (12a), a first motion link (14a) and a first embedding disc (10a) comprising at least one contact element (26), the first embedding disc (10a) being arranged concentric to the amplitude disc (8) and the spindle (4) being coupled to the first embedding disc (10a), the first motion link (14a) being connected to the housing (2) and the first embedding disc (10a). The at least one first elastic element (12a) abutting the housing (2) with one end and the first embedding disc (10a) and/or the first motion link (14a) with the other end for pre-tensioning the first embedding disc (10a) towards the amplitude disc (8), whereby the contact element (26) of the first embedding disc (10a) is abutting the amplitude disc (8) and the irregularity (28) at least once per turn when the machining device is in use, so that a relative rotation between the amplitude disc (8) and the first embedding disc (10a) results in vibration in the spindle (4).

## Description

### Technical Field

The invention relates to the field of machining devices in particular to a machining device that can provide efficient chip breaking, the machining device being usable with all kinds of materials such as metal, composite, plastic, carbon and for multilayer material or composite material where different layers of material, such as metal and carbon or other fiber material layers are combined. The herein disclosed machining device may be used for drilling, turning and milling.

### Background of the Invention

Drilling holes in components and parts that are later used to assemble vehicles, aircrafts or other equipment was historically a rather simple task since the material was usually uniform, homogenous and, in many cases, it was made of metal such as aluminum, steel or titan, as for example in the aircraft manufacturing industry or space industry. This means that rather high-quality holes could be drilled using conventional drilling tools and a decent machine. However, such a conventional drill typically produces rather long spiral chips that are removed from the hole via the spiral flutes of the drill tool. Such long spiral chips are usually not wanted since they pose a problem to the drill hole quality. When a hole must be drilled into a composite material such as for example aluminum - carbon - titan then these spiral chips pose an even larger problem and in particular the metal cuttings in the example of a composite material comprising layers of aluminum - carbon - titan can destroy the surface of the drill hole in the carbon material. That is why small chips are desirable since they do not destroy the carbon or other material in the hole during removal from the hole and since they do not enter in between material layers during drilling, because they can be efficiently removed from the drill hole using the spiraled shape of the drill bit. In order to avoid the destruction of holes, known solutions of drilling devices provide an oscillating movement in the longitudinal direction of the drill spindle that is typically sinus shaped. When a drill spindle oscillates according to sinus shaped pulses it is possible to provide chips, in particular a spiral chip that is thinner at regular distances but it is not possible to provide sharp predetermined breaking points on the spiral chips. The sinus shaped curve of the pulse will lead to a smooth surface and harmonic thickness even if it is following the sinus shaped curve. The chips produced when using known drilling devices are therewith usually not homogenous in thickness. The chips produced by the drilling device as described herein are small and comprise sharp predetermined breaking points. In addition, it is possible to remove more material per time with the drilling device as described herein. This is because of the very short and distinct pulse and the therewith connected very quick acceleration of the drill spindle during such a pulse, which leads to a longer engagement of the drill tip in the material and therewith to a higher material removal per time period compared to known drill devices. One may now say that it is rather simple to change the curve from sinusoidal to something peak formed but this is not a as simple as one may think. The limitation of providing a sinus shaped pulse is usually due to electronic, mechanic and/or hydraulic systems used to generate the oscillation and due to a rather big mass that needs to be moved for generating the oscillation. This means that known devices cannot provide such a high axial acceleration that would make the sinus shaped pulse/curve peak formed having a plateau after the peak on the drill tip or the like. If one analyzes the thickness of the spiral cutting that is cut using a sinus pulse the thickness follows a wave shape. The pulse acceleration cannot be faster than the electrical energy or hydraulic fluid can provide in view of the high mass that needs to be moved and thus a sinus shaped pulse is typically what can be achieved with known drill devices and therewith it is difficult to provide a drilling device that produces small cuttings or small cutting chips combined with high productivity.

Another challenge when holes need to be drilled in composite material is usually that the drill needs to be controlled in different ways depending on the current position or current depth of the drill tip in the hole. For example, when a hole needs to be drilled in a composite material comprising an outer shell of 3mm aluminum, a middle layer of 5mm carbon fiber and an inner layer of 3mm titan then the drill device could theoretically operate with pulse for aluminum and titan and without pulse in carbon fiber. This means that the drilling device will pulse or oscillate from 0 to 3 mm in the aluminum layer and then not pulse form 3mm to 8mm in the carbon layer and then pulse again from 8mm to 11mm in the titan layer. Such adjustment or controlling abilities of the drill device are not possible today with mechanical tool holder solutions but possible with hydraulic or electromagnetic solutions. However, there is always a limitation either in (high) frequency or in (high) amplitude and it is difficult to provide sharp peaked- and plateaued- curves that can provide sharp predetermined breaking points in the chips.

In addition to the above the manufacturing industry is relying more and more on robots and theses robots have limitations as well. The force of the drill device's axial pulse must usually be absorbed by stiff fixtures or rigid computer numerical control (CNC) machines. Robots or robotic arms generally struggle with absorbing such vibrations created by high accelerations due to low stiffness, since robots are typically not built for that. Since the use of robots and robotic devices in industrial manufacturing processes is increasing, there is however a need to provide a drill device that can provide pulses and which drill device can be held by a robot or robotic arm. Another challenge when it comes to robotic solutions is typically space, the machining device or in particular the drill device that the robot should hold needs to be as small as possible to avoid space issues while the robot is operating.

A drill device that takes most of the above items into account is disclosed in EP21207507.1. The drill device disclosed in EP21207507.1 is however comparably big and voluminous as seen in a radial direction and a non-cylindrical shape. The herein presented solution has a smaller radial extension and a generally cylindrical shape.

In addition, the prior art solutions do not provide enough productivity. Many of the components used in various industries are nowadays composite materials and they require therewith subtle and improved handling. Another requirement is that the quality of the hole is good and that damaged holes are reduced to an absolute minimum, since the composite materials that typically require a special drill system are expensive and waste should be avoided.

In addition to the above efficient chip breaking may also be required in turning and milling application. However, in the prior art vibration-based machining was mainly developed for drilling. The present invention may however also be used to provide vibration based turning or milling. Typically, in the prior art a rather big mass is vibrated or oscillated, which can lead to vibrations in the entire machine. Further, due to the comparably high mass that needs to be actuated for oscillations the energy consumption is also comparably high. Finally, the comparably high mass also leads to limitations as to the specific frequencies and amplitude shapes that can be achieved. The herein disclosed invention remedies at least a part of the above-mentioned shortcomings.

It is therewith an object of the present invention to remedy at least some of the drawbacks explained previously.

### Summary of the Invention

An object of the present invention is to provide a machining device that is efficient, versatile and that is comparably small in size.

The inventors of the present invention have realized that it is possible to provide a machining device that provides vibration along a longitudinal axis of a drill spindle without using a pulse spindle that is oriented perpendicular to the drill spindle but rather with a pulse shaft that is arranged concentric to the drill spindle further using a concentrically arranged amplitude disc and at least one embedding disc being embedded in the housing via at least one motion link. By providing the embedding disc with some sort of a contact element that is following the surface of the amplitude disc, the amplitude disc can be provided with at least one irregularity that interacts with the contact element once per turn so that a vibration in the at least one embedding disc occurs. By coupling the drill spindle to the at least one embedding disc, the vibrations in the at least one embedding disc can be transferred to the drill spindle. The inventors have further realized that it is possible to drive the pulse shaft independently from the drill spindle so that the vibration can be adjusted depending on rotational speed of the pulse shaft. In addition, by providing the amplitude disc with a radial recess and by providing the irregularity on at least one sled that is moveable in an axial direction of the amplitude disc within the radial recess the amplitude of the vibration movement in the axial direction of the drill spindle may be adapted and adjusted, especially if the irregularity on the sled is formed accordingly.

The inventors have further realized that it is possible to use the machining device disclosed herein for drilling, turning and milling, as previously mentioned.

Disclosed herein is a machining device comprising a housing, a spindle comprising at least one bearing and adapted to hold a component, a pulse shaft, an amplitude disc coupled to the pulse shaft and arranged concentric to it, the pulse shaft defining an axial direction, the amplitude disc further comprising at least one recess, in which a sled is arranged, the sled having an irregularity, which comprises a concave part as seen in a plane defined by the amplitude disc. The machining device further comprises at least one first elastic element, a first motion link and a first embedding disc comprising at least one contact element, the first embedding disc being arranged concentric to the amplitude disc. The spindle is coupled to the first embedding disc and the first motion link is connected to the housing and the first embedding disc. The at least one first elastic element abutting the housing with one end and the first embedding disc and/or the first motion link with the other end for pre-tensioning the first embedding disc towards the amplitude disc. The contact element of the first embedding disc is abutting the amplitude disc and the irregularity at least once per turn when the machining device is in use, so that a relative rotation between the amplitude disc and the first embedding disc results in vibration in the spindle.

The spindle according to the above may be a spindle unit that is arranged coupled to the first embedding disc, whereby such a spindle unit may comprise a spindle motor that is driving the spindle.

The pulse shaft may be a hollow pulse shaft.

The presented machining device generates a very distinct vibration with sharp peaks and plateaus if needed, depending on the shape of the irregularity in the sled and the rotational speed of the hollow pulse shaft. The machining device is further concentric so that a housing can be cylinder shaped and so that a space is used in an efficient manner.

The at least one elastic element may be several elastic elements.

The motion links described herein may be membranes, laminated springs, linear guides or any other suitable motion link. A main purpose of the motion link is to direct a movement in a specific direction.

The recess may be a radial recess.

The contact element may be a bearing that is rolling on the amplitude disc. The contact element is thereby contacting a surface of the amplitude disc, which surface is oriented perpendicular to the axial direction.

In an embodiment the sled may be arranged radially displaceable and has a longitudinal shape and a cross section of the irregularity may be increasing or decreasing in the radial direction of the amplitude disc and a radial position of the sled and therewith a point of contact between the irregularity and the contact element may be changed when a radial position of the sled is changed.

The above-described embodiment allows to adapt the amplitude based on the shape of the sled and in particular of the irregularity. This makes the machining device more versatile and also adaptable to various materials and composite materials.

The displacement of the sled may be achieved using a bevel gear in combination with a threaded shaft. Alternatively, the displacement may be achieved using a sled motor, which may be embedded in the sled. A sled motor may be used in combination with a threaded shaft or the like, whereby the sled motor moves a sleeve on the threaded shaft and thereby changing the radial position of the sled. Other solutions may be feasible also the one illustrated in the figures. However, the solution for moving the sled(s) presented in the figures is in no way to be understood in a limiting manner. The skilled person will understand that the sled(s) may be radially displaced using other solutions and mechanisms.

In a further embodiment the irregularity may comprise a first part that is flush and parallel with the plane defined by the amplitude disc. The irregularity may further comprise a second part that is concave and linearly increasing in the radial direction and away from the first part.

By providing a design of the irregularity according to the above it is possible to provide a machining without any amplitude, namely when the first part is in contact with the contact element and then an increasing amplitude and thus oscillation, when the contact element is in contact with the second part depending on the position of the sled.

With the described embodiment it is further possible to provide a machining operation that can be changed and adapted from zero amplitude to maximal amplitude on the go and thus during a machining or drilling task. This makes the machining device highly versatile and therewith useful.

The above embodiment provides a high flexibly for application of the machining device.

In an embodiment the pulse shaft may comprise a rotationally symmetric part, having an increasing or decreasing diameter at least along a part of its length as measured in the axial direction. The rotationally symmetric part may further comprise at least one engagement structure on its lateral surface and it may arranged displaceable along the axial direction and relative the amplitude disc and wherein a free end of the sled is projecting from the amplitude disc in a radial direction for engagement in the engagement structure of the rotationally symmetric part.

The purpose of the rotationally symmetric part is to displace the sled(s) in the radial direction of the amplitude disc and therewith to change the amplitude of the oscillation as explained previously. As mentioned instead of the rotationally symmetric part a bevel gear with a threaded shaft may be employed or any other suitable solution such as a magnetic displacement using a sled motor or the like.

It is further possible to provide a part of the sled with a surface that is flush and flat such as the first part, so that a zero amplitude and thus non-vibrational machining or drilling can be chosen. This may be advantageous if the machining device is used for composite material, which does not require vibrational machining or drilling.

The rotationally symmetric part may have various shapes such as spheric, halfspheric, elliptic, half-elliptic or cone. In an embodiment the rotationally symmetric part may be a cone, preferably with a cut-off apex.

Depending on the requirements the rotationally symmetric part may be adapted and configured correspondingly, using a cone-shaped rotationally symmetric part with a cut-off apex may however provide for a linear movement when the amplitude is changed due to displacement of the cone-shaped rotationally symmetric part along the axial direction.

In an embodiment the engagement structure is a groove and shaped as dovetail and wherein the sled comprises a correspondingly shaped free end that engages in the groove.

A dovetail shaped groove works for push and pull and since the amplitude disc is designed to rotated with the hollow pulse shaft and the rotationally symmetric part, the centrifugal force affecting the sled is not leading to a change in radial position of the irregularity and therewith an unwanted change in amplitude.

In a further embodiment the amplitude disc may comprise more than one recess and more than one sled and wherein the rotationally symmetric part comprises a corresponding number of engagement structures so that each sled has an assigned engagement structure.

This together with the rotational speed of the hollow pulse shaft may lead to a change in frequency of the vibrations or pulses.

Any number of sleds and corresponding number of engagement structures may be suitable but in particular any number from 1 (one), 2 (two), 3 (three) or 4 (four) may be suitable.

In still a further embodiment the pulse shaft may be driven independently of the spindle. In order to do this the machining device may comprise a pulse shaft motor, the pulse shaft motor being connected to the pulse shaft for driving the pulse shaft independently of the spindle.

As mentioned before this may allow to adjust frequency independently of the rotational speed of the spindle.

Alternatively, the spindle and the pulse shaft may be driven with one single motor, whereby a gearing or the like is used provide different rotational speeds of the spindle and the pulse shaft.

In a further embodiment the machining device may comprise a pulse shaft motor and a spindle motor, the pulse shaft motor may be connected to the pulse shaft for driving the pulse shaft and the spindle motor may be connected to the spindle for driving the spindle independently of the pulse shaft.

The rotational speed and/or acceleration may thus be adjusted for the spindle and/or the pulse shaft, independently of one another.

In another embodiment the machining tool may further comprise a bearing, a nut, for example a ball screw nut, and a symmetric part shaft comprising a thread on which thread the nut is arranged and on which nut the bearing is arranged. The symmetric part shaft is connected to an amplitude motor and arranged in between the spindle and the pulse shaft, whereby the bearing is arranged on the nut, which bearing is connected to the rotationally symmetric part so that a rotation of the symmetric part shaft leads to a displacement of the rotationally symmetric part along the axial direction.

This may allow to adjust the amplitude in a seamless manner via the amplitude motor, to which the symmetric part shaft may be connected. In addition, it may prevent the rotationally symmetric part from rotating during adjustment. This may also be achieved in another manner such as for example via grooves and ridges that extend in the axial direction of the hollow pulse shaft.

In a further embodiment the rotationally symmetric part may comprise an amplitude motor arranged to rotate the sleeve for changing the position of the rotationally symmetric part on the pulse shaft.

In an embodiment the machining device may comprise a second embedding disc comprising at least one contact element, at least one second elastic element, a second motion link and a counterweight, the sled of the amplitude disc being designed symmetric as seen versus a plane defined by the amplitude disc and comprising at least two irregularities, one on each side of the amplitude disc, the second embedding disc being arranged concentric with the amplitude disc and abutting the amplitude disc with the contact element on an opposite side of the first embedding disc, the second motion link being connected to the housing, the second embedding disc and the counterweight, wherein the at least one second elastic element is arranged to abutting the housing with one end and the second embedding disc, the second motion link and/or the counterweight with the other end for pre-tensioning the second embedding disc towards the amplitude disc, wherein the contact element of the second embedding disc is abutting the amplitude disc and the irregularity at least once per turn when the machining device is in use, so that a relative rotation between the amplitude disc and the second embedding disc results in a vibration in the counterweight.

A design according to the above with a counterweight oscillating at the same frequency and amplitude as the spindle and therewith the actual tool or workpiece will result in a housing in which the vibrations are cancelled out by one another. This may allow a robot to easily hold the machining device without much effort. It may also improve ergonomics in a case a human is handling the machining device.

In an embodiment disclosed herein the machining device may comprise a plurality of elastic elements. Each side, as seen in relation to the amplitude disc, may comprise several elastic elements.

The elastic elements may be springs, pneumatic- or hydraulic cylinders, elastomers or any other structure than can elastically push an object towards another object.

The number of elastic elements may be adapted depending on the required elastic strength or depending on the weight or size of the machining device.

In an embodiment the first embedding disc and/or second embedding disc comprises at least two contact elements and whereby the amplitude disc comprises at least two irregularities. Ideally the number of contact elements corresponds to the number of irregularities.

The number of contact elements and the number of irregularities may be symmetrically distributed along the circumference of the first and/or second embedding disc and the amplitude disc, respectively.

The contact elements may be bearings designed to roll on the amplitude disc when the machining device is in use.

Providing at least two contact elements and a corresponding number of irregularities may lead to a stable contact between the amplitude disc and the first- or second embedding disc, which may lead to a distinct pulse. Preferably the first- and/or second amplitude disc may each comprise three or four contact elements or bearings for that matter and a corresponding number of irregularities.

The contact elements may also be embodied as gliding surfaces, for example made of ceramic embedded in an oil bath or the like, similar to a clutch.

In an embodiment herein the spindle may be adapted to hold the component, which may be in the form of a drill, a milling tool or a blank.

The machining device according to the invention may thus be used and/or installed and/or be part of a lathe, a drill device or a milling device.

In case the machining device is used as a drill device a drill bit is installed and held in the drill spindle and such a solution may be used to efficiently provide oscillations and efficient chip breaking.

In case the machining device is used in a lathe, the blank is held in a chuck of the spindle, which results in a vibration of the turning spindle and therewith the blank along a rotational axis of the blank and the turning spindle, respectively.

Similarly, to the above a milling tool may be installed in the spindle for efficient chip breaking during milling due to the oscillations.

When the machining device according to the invention is used for drilling and milling, it may be held by a robot.

The advantage of the herein presented machining device is that a comparably small mass is vibrating and this leads to higher flexibility concerning frequency and amplitude and reduced energy consumption.

Further aspects and example embodiments are illustrated in the accompanying drawings and/or described in the following description.

### Brief Description of the Drawings

The present invention will now be described, for exemplary purposes, in more detail by way of embodiment(s) and with reference to the enclosed drawings, in which:
- Fig. 1: schematically illustrates a perspective view of a machining device according to the invention;
- Fig. 2: schematically illustrates a perspective view revealing details of the machining device;
- Fig. 3: schematically illustrates a perspective view of a detail of figure 2 as illustrated;
- Fig. 4a: schematically illustrates another perspective view of a machining device with certain parts removed for illustrative purposes;
- Fig. 4b: schematically illustrates a perspective view of a detail of figure 4a;
- Fig. 5: schematically illustrates a side view of the machining device with certain parts not being shown for illustrative purposes;
- Fig. 6: schematically illustrates a perspective and exploded view of the machining device with the housing removed,
- Fig. 7: schematically illustrates another perspective and exploded view of the machining device with the housing removed, and
- Fig. 8: schematically illustrates another view of an embodiment of the machining device according to the invention, in which the machining device is shown in a turning machine.

### Detailed Description

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive sense.

In the tool machining device illustrated herein various motors and servomotors may be installed so that the machining process can be automatically or at least remotely controlled.

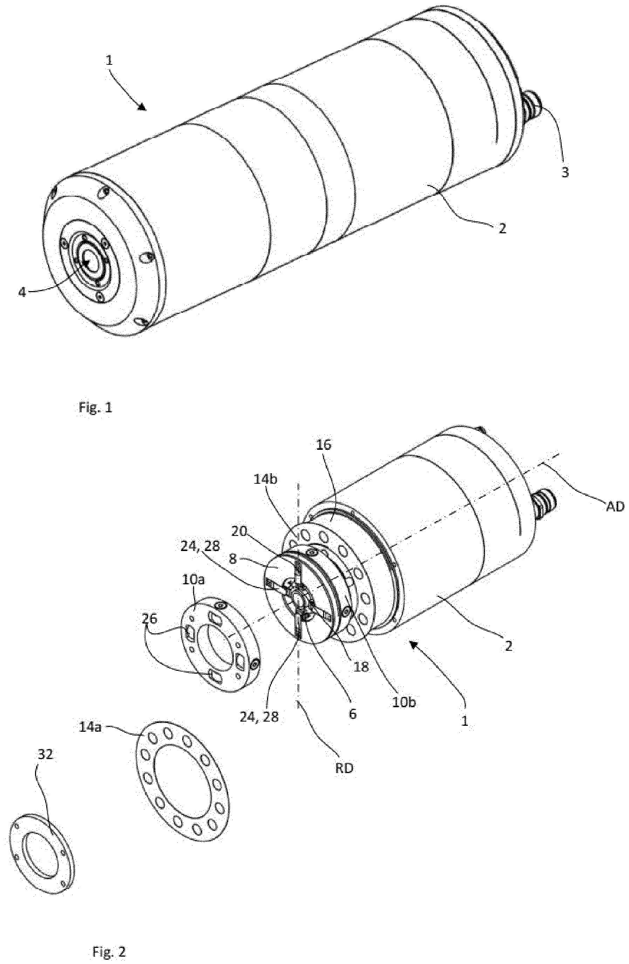

Figure 1 schematically illustrates a machining device 1 according to the invention, the machining device 1 comprising a housing 2 and a spindle 4. The machining device further comprises a power adapter 3. The housing 2 may be shaped as a cylinder.

The machining device 1 may be used as or embodied as a turning device, a milling device or a drilling device.

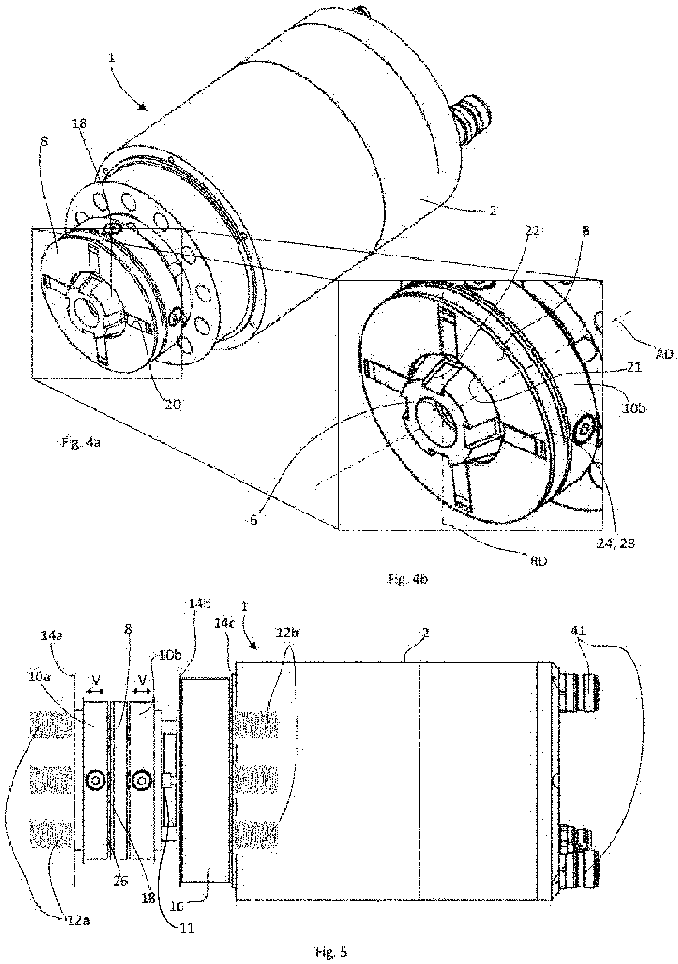

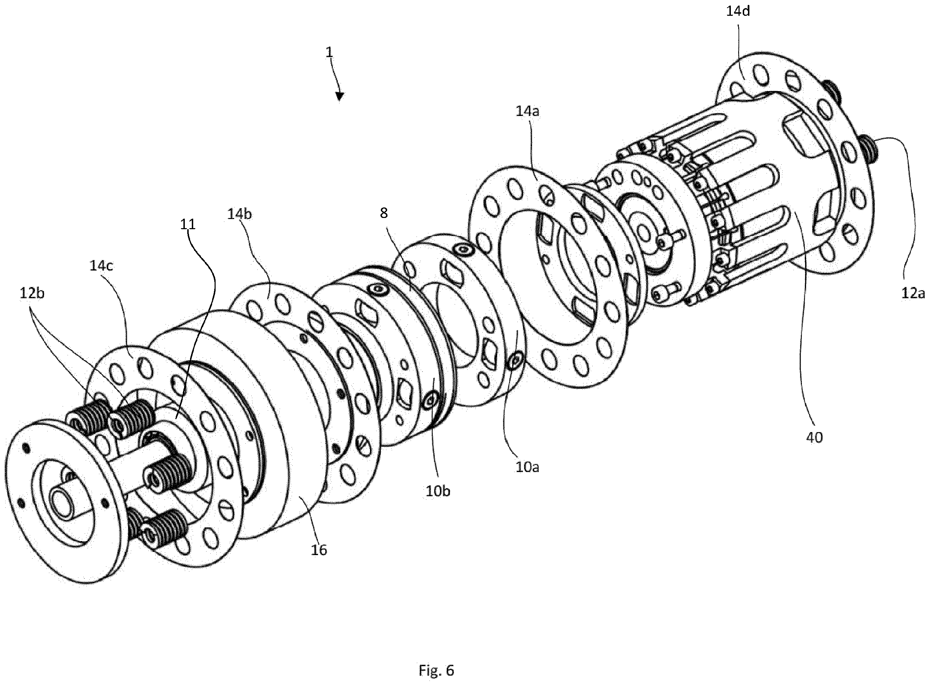

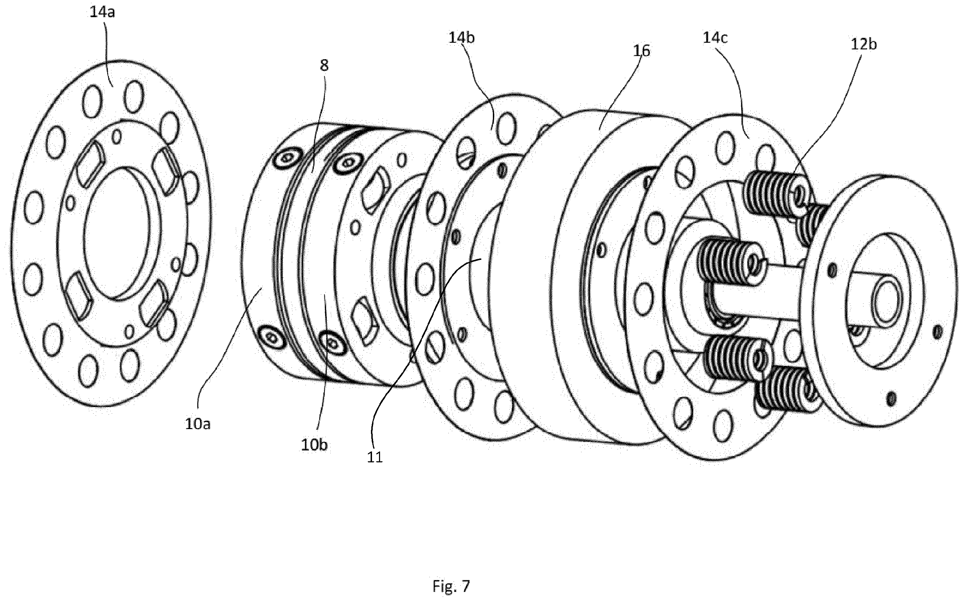

Figure 2 schematically illustrates the machining device 1 according to figure 1 with certain parts removed. The removed parts are part of the housing 2 and the front part of the machining device 1. The machining device 1 further comprises a symmetric part shaft 6, a hollow pulse shaft 11 (c.f. figures 5 to 7) an amplitude disc 8, first and second elastic elements 12a, 12b (c.f. figures 6 and 7), a first embedding disc 10a, a second embedding disc 10b, a first and second motion link 14a, 14b and a fixation disc 32. The machining device further comprises a counterweight 16. Around or within the hollow pulse shaft 11 a rotationally symmetric part 18 is arranged.

The machining device 1 may comprise a vibration mechanism comprising of the hollow pulse shaft 11 (c.f. figures 5 to 7), the amplitude disc 8, the first elastic elements 12a, the rotationally symmetric part 18, the first motion link 14a, the first embedding disc 14a and the fixation disc 32. The hollow pulse shaft 11 is coupled to the amplitude disc 8 with one end and to an amplitude motor (not visible in the figures) with the other end.

The machining device 1 may further comprise a damping mechanism comprising of the second motion link 14b, the counterweight 16, the second elastic element 12b (c.f. figures 6 and 7), the second embedding disc 10b and a third motion link 14c (visible in figures 6 and 7).

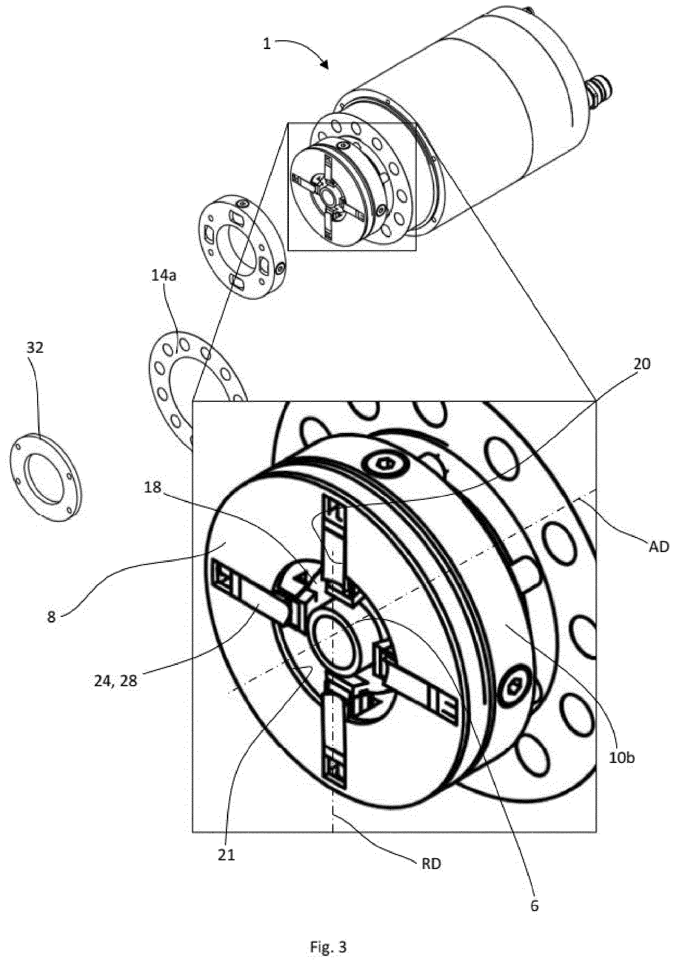

The vibration mechanism and the damping mechanism will now be further explained referring to figures 2 and 3. Figure 3 thereby illustrates an enlargement of a part of figure 2 for the reasons of better understanding and visibility.

Firstly, it is however to be noted that the vibration mechanism may be used independently from the damping mechanism, which becomes clear when figures 2 and 3 are considered. The result of the damping mechanism is that the vibrations in the machining device 1 do not transfer to the housing 1 and therewith any entity that is holding the machining device 1 such as a robot or operator.

The vibration mechanism provides pulses in the machining device 1, which pulses or oscillations are transferred onto the spindle 4 for efficient chip breaking of the swarf or drilling chips. The pulses that can be generated with the vibration mechanism disclosed herein are very sharp and distinct, which generates a very distinct and sharp predetermined breaking point in the chips and swarf.

In order to generate vibrations, the hollow pulse shaft 11 is designed to rotate and drives the amplitude disc 8, due to a fix connection between the amplitude disc 8 and the hollow pulse shaft 11. The amplitude disc 8 in turn rotates the rotationally symmetric part 18. The rotationally symmetric part 18 is arranged displaceable along an axial direction AD, which axial direction is defined by the spindle 4, symmetric part shaft 6 and the hollow pulse shaft 11. The spindle 4 is thereby arranged within the symmetric part shaft 6 and the symmetric part shaft 6 is arranged within the hollow pulse shaft 11. The rotationally symmetric part 18 is designed to extended into and out of an opening 21 of the amplitude disc 8. The amplitude disc 8 comprises at least one recess 20, in the example of the figures it is four recesses 20, whereby in each recess 20 a sled 24 is arranged whereby the sleds 24 are arranged to be displaceable within the recess 20 in a radial direction RD by interaction with the rotationally symmetric part 18. In figures 2 and 3 the rotationally symmetric part 18 is in a somewhat retracted position so the sleds 24 are drawn towards a centre of the axial direction and the hollow pulse shaft 16, respectively. Referring to figure 3, the sleds 24 are designed to move in a radial direction RD depending on the position of the rotationally symmetric part 18.

The sleds 24 are formed as longitudinal elements, thus for example bars or cylinders. Each of the sleds 24 comprises an irregularity 28 in the form of a convex recess that extends more or less along the length of each sled 24. Some part of the sleds 24 may however be flush and in line with the surface defined by the amplitude disc 8. This way it can be chosen to have a drilling operation without any amplitude or with amplitude 0 (zero) and thus no vibration, depending on the position of the rotationally symmetric part 18 versus the hollow pulse shaft 16. Further, since the irregularities are in the form of a convex shape that is changing, preferably increasing or decreasing, along a radial direction RD, the amplitude of the oscillations can be adjusted based on the displacement of the rotationally symmetric part 18 versus the amplitude disc 8 and also the sleds 24, since the rotationally symmetric part 18 has an increasing or decreasing diameter or radius along the its length as seen parallel to the axial direction AD.

In the example of the embodiment given in the figures, in particular figures 2 and 3, the sleds 24 are symmetric versus the amplitude disc 8 or a plane defined by the amplitude disc so that the second embedding disc 10b is exposed to the same irregularity (not visible in figure 2) as the first embedding disc 10a.

Still referring to figures 2 and 3, the first and second embedding discs 10a, 10b do not rotate when the machining device 1 is in use and neither does the counterweight 16 and the first, second (and third) motion links 14a-c. The parts that rotate when the machining device 1 is in use are the amplitude disc 8 with the sleds 24, together with the hollow pulse shaft 11 and the rotationally symmetric part 18. This rotation leads to a vibration of the first- and second embedding discs 10a, 10b due to the contact element 26 passing over the irregularity 28 of each sled 24 for each turn, thus four pulses per turn, this becomes well when studying figure 3. By embedding the spindle 4 via a bearing or the like in either the first - and/or second embedding disc 10a, 10b the vibrations or pulses of the vibration mechanism can be transferred to the spindle 4 and the counterweight 16, respectively. The first embedding disc 10a transfers vibration pluses to the spindle 4, while the second embedding disc 10b transfers vibration pulses to the counterweight 16. In order to ensure an efficient and smooth vibration or oscillation, the first embedding disc 10a is suspended in the housing 2 via the first motion link 14a and 14d, which is embodied as a membrane. Likewise, the second motion link 14b and 14c suspends the second embedding disc 10b and the counterweight 16 in the housing 2. The motion links 14a-14d may be membranes as illustrated or linear guides or alternatively laminated springs. Fixation disc(s) 32 are thereby used to clamp the first, second and third and fourth motion links 14a - 14d or membranes between the fixation discs 32 and the first - and second embedding disc 10a, 10b and counterweight 16 respectively via screws (not shown). On both sides of the amplitude disc 8 first - and second elastic elements 12a, 12b are arranged for pre-tensioning the first embedding disc 10a (first elastic elements 12a) and the second embedding disc 10b (second elastic elements 12b) towards the amplitude disc 8 and therewith the sleds. The first - and second elastic elements 12a, 12b are embodied as springs but they may also be embodied as hydraulic or pneumatic cylinders, elastomers or other elastic elements. Each side may comprise a plurality of elastic elements. In the embodiment shown each side comprises five elastic elements 12a, 12b. This number may however be adapted according to requirements and specification.

In light of the above in one embodiment (not shown), the counterweight 16 and therewith the damping unit may not be employed. In such an embodiment the amplitude disc and the sleds may be adapted accordingly, it is however possible to not adapt the sleds.

The contact elements 26 are illustrated as bearings that roll on the surface of the amplitude disc 8. The surface is thereby the one that is oriented perpendicular to the axial direction AD.

Turning now to figures 4a and 4b the vibration mechanism and in particular the axial displacement of the rotationally symmetric part 18 along the axial direction AD will be further explained. Figure 4a illustrates a similar view as figure 2 but again with certain parts of the machining device 1 being removed, such as for example the housing 2. In figure 4a and 4b the rotationally symmetric part 18 is extending further into the opening 21 of the amplitude disc 8. Due to its cone-shape with a cut off apex, the rotationally symmetric part 18 is therewith pushing the sleds 24 towards the periphery and therewith changing the point of contact between the contact elements 26 (c.f. figure 2) of the first - and second embedding discs 10a, 10b and the irregularity 28 of the sleds 24 as seen in the radial direction RD. The rotationally symmetric part 18 comprises four engagement structures 22 in the form of grooves 22 that interact with free ends of the sleds 24. The grooves are formed in a dovetail manner so that they work for push and pull movements and thus for moving the sleds 24 towards the periphery of the amplitude disc 8 and for moving the sleds 24 towards the centre of the amplitude disc 8. Further the dovetail shape of the groove of the engagement structure 22 also reduces the or cancels the effect of centrifugal force during rotation; - the sleds 24 cannot be pushed out towards the periphery of the amplitude disc 8 due to the centrifugal force.

In an embodiment (not shown) the sleds may be embedded in the amplitude disc via springs or other elastic elements, whereby the elastic elements are arranged between the periphery of the amplitude disc and the end of the sled that is engaged in the recess so that the elastic elements always push the sleds towards the rotationally symmetric part. This way the dovetail-shape of the engagement structure could be obsolete since the elastic elements are designed to work against the centrifugal force when the machining device is in use. Further, this solution may be employed if the amplitude disc and the rotationally symmetric part is designed to be not rotating while the first and second embedding disc are and corresponding parts are designed to be rotating, thus a kinematically reversed mechanism.

The rotationally symmetric part 18 is arranged in a displaceable manner. The displacement of the symmetric part 18 along the hollow pulse shaft 11 may be achieved via a symmetric part shaft 11 that is arranged between the spindle 4 and the hollow pulse shaft 11. In such an embodiment the hollow pulse shaft 11 is directly coupled to a motor with one end, namely an amplitude motor, and to the amplitude disc 8 with the other end. The amplitude motor is thus designed to drive the amplitude disc 8 in such an embodiment.

To provide a displacement of the rotationally symmetric part, the symmetric part shaft 6 may comprise an outer thread at its outer surface, on which outer thread a nut may be arranged. The nut may be ball screw nut. The nut is connected to the rotationally symmetric part 18 via a bearing so that the rotationally symmetric part 18 can freely rotate around the symmetric part shaft 6. The bearing may be fixedly connected, preferably with an inner opening, to a sleeve that is engaging the outer thread of the symmetric part shaft 6, while the bearing is also fixedly connected, preferably with an outer side, to the rotationally symmetric part 18. The symmetric part shaft 6 may be connected to an amplitude motor, which provides the ability to adjust the amplitude of the oscillation by rotating the symmetric part shaft 6, which in turn leads to a displacement of the rotationally symmetric part 18 along an axial direction AD, due to the described design. The hollow pulse shaft 11 may be designed to extend over the rotationally symmetric part 18 and to be fixedly connected to the amplitude disc 8.

Many alternative solutions to provide a displacement along an axial direction AD of the rotationally symmetric part 18 may be formed and realized, as the skilled person will understand. The disclosure herein is not limited to the above embodiment and description.

Figure 5 illustrates a side view of the machining device 1 with a part of the housing 2 removed. The first embedding disc 10a and the second embedding disc 10b are well visible and the arrows V indicated the vibration direction of the first - and second embedding disc 10a, 10b. In the between the first - and second embedding discs 10a, 10b the amplitude disc 8 is further well visible and so are the contact elements 26 and the rotationally symmetric part 18. From figure 5 it also becomes clearer how the first, second and third motion links 14a-c, embodied as membranes suspend or embedded the vibration mechanism in the housing and how they allow a vibration movement. Even though only three motion links 14a-c of the four motion links 14a-14d are shown in figure 5, there is a fourth motion link 14d present, which holds the spindle 4, this fourth motion link 14d is illustrated in figure 6. Figure 5 further schematically illustrates how the first elastic elements 12a act onto the first embedding disc 10a and first motion link 14a and how the second elastic elements 12b act onto the third motion link 14c and the counterweight 16, respectively. The effect of the first- and/or second elastic elements 12a, 12b is that the first - and second embedding disc 10a, 10b sit snug against the amplitude disc 8 and that therewith the irregularities 28 of the sleds have the desired effect of generating a vibration of the spindle and the counterweight 16.

The irregularities 28 are per definition designed to extend beyond the surface of the amplitude disc 8 or they retreat from the surface of the amplitude disc 8. Further, the irregularities 28 of each sled 24 have a changing cross section in a radial direction RD and thus along the longitudinal extension of the sled 24. The purpose of this is as explained the possibility to change the amplitude of the vibration by displacing the sled 24 radially through the rotationally symmetric part 18.

The irregularity 28 may further be convex or concave but it may also be design in any other suitable manner, for example like a cone that is cut in half along its height or a cylinder that is cut in half along its length. In the illustrated embodiment in the figures the irregularity 28 is formed or embodied concave. It is however conceivable to alternatively have the irregularity formed convex. Also recesses formed according to the previous may form the irregularity 28. Figure 5 further illustrates connectors 41 for the connection of control - and power cables for steering and driving the machining device 1.

Turning now to figures 6 and 7 a somewhat exploded view of the machining device 1 is now explained. In figures 6 and 7 the housing of the machining device 1 is not shown. In addition to the already explained parts of the machining device 1 according to the invention, figure 6 further illustrates the first elastic elements 12a and the second elastic elements 12b in a clear manner. Further the first - 14a, second - 14b, third - 14c and even a fourth motion link 14d are well visible in figure 6. A spindle unit 40 is further provided and coupled to the first embedding disc 10a, as for instance illustrated in figure 6. The spindle unit 40 may comprise a spindle motor (not visible) for driving the spindle 4.

A mass of the counterweight 16 and the second embedding disc 10b may at least more or less correspond to the weight of the movable parts of the spindle 4. This way the vibrations of the counterweight 16 and the second embedding disc 10b effectively cancel out the vibration of the first embedding disc 10a and the spindle unit 40 when the machining device is in use.

Figure 7 illustrates a similar view as figure 6 but without drill bit exchange unit. The second elastic elements 12b are well visible acting onto the third motion link 14c and the counterweight 16 and finally also onto the second embedding disc 10b. Even though the counterweight 16 is shown in similar size as in figure 6, it may be chosen to be smaller and in particular lighter as in figure 6, since the drill bit exchange and therewith its mass is not embodied in figure 6.

Even though not explicitly mentioned, the irregularity may be a bump or the like in the amplitude disc whereby the irregularity is fixedly or integrally formed within the amplitude disc. This may lead to a constant amplitude of the oscillations, which amplitude cannot be changed or adjusted. However, even such an irregularity may be chosen to not extend over the entire amplitude disc as seen in a radial direction, so that still a vibration or oscillation with amplitude zero (0) can be chosen during operation. If this needs to be achieved, either the contact elements of the first - and/or second embedding disc need to be adjustable in a radial direction and/or the sled and rotationally symmetric part need to be embodied.

The machining device 1 may be powered by separate motors and/or via power cables.

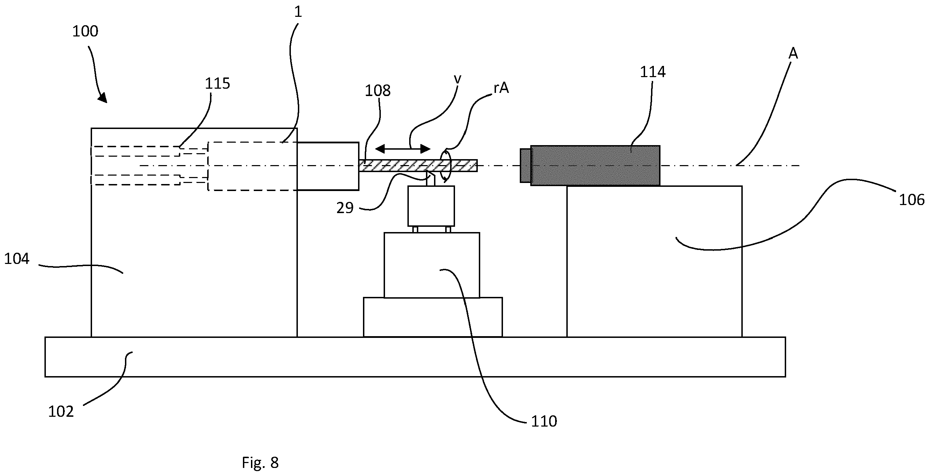

Figure 8 illustrates a cross sectional view of a lathe or turning machine 100 comprising a machining device 1 according to the invention disclosed herein. The turning machine 100 comprises a bed 102, a head stock 104 and a tail stock side 106 interconnected with one another via the bed 102. A blank 108 is held in the machining device 1. The blank 108 does not engage nor touch a tail stock. If, in some cases a bigger or longer blank (not shown) may be held in the machining device 1, the tail stock side 106 may be used, which means that the tail stock 114 comprises an elastic centre or the like, which may be used to absorb vibrations originating the machining device 1. The head stock 104 may be designed as swiss-type lathe comprising a slide or carriage 115, , which is connected to the machining device 1 so that the machining device 1 can be moved along a rotation axis A. The movement of the machining device 1 is indicated by the arrow v. The actuators 115 are not designed to rotate, the rotation is provided by the machining device 1 as previously explained herein and as indicated by the rotational direction rA. The machining device 1 may be engaged directly in the head stock 104, whereby the actuation may be provided within the head stock 104, as illustrated with dashed lines in figure 8. The machining device 1 is designed to hold the blank 108 or workpiece as described previously and similar to a drill, and due to the actuators 115 the machining device 1 can be moved along the longitudinal axis A and thereby move the blank 108 over a tool 28 used for turning, while the blank 108 is rotating and vibrating due to the design of the machining device 1. At the tail stock side 106 the tail stock 114 is arranged. The tail stock 114 may be designed to receive the blank 108 in an elastic manner and upon movement of the machining device 1. This is illustrated by a partially transparent tail stock 114 where the blank 108 can be absorbed into the tail stock 114 when the machining device 1 is moving along the longitudinal axis A. The lathe further comprises a machine bed 110 comprising the tool 29, which is designed to engage the blank 108 and therewith remove material from the blank 108 and cut into the latter in order to generate a work piece, for example a rod with specific diameters along its longitudinal extension. Due to the vibrations or oscillations provided by the machining device 1 along the longitudinal axis A, the swarf or chips are efficiently broken down into small pieces, as previously explained. This turning solution is preferably used for comparably small blanks 108 and workpieces, it is however possible to adapt the size of the machining device 1 to accommodate larger blanks, as the skilled person will understand.

The actuators 115 may be any type of linear guide, such as linear guides, cylinders, conveyors or any other suitable type.

The invention has now been described referring to several figures and various alternatives and embodiments. Various features are described herein as being present in "some embodiments" in "another embodiment" or "still another embodiment" and so on. Such features are not mandatory and may not be present in all embodiments. Embodiments of the invention may include zero, any one or any combination of two or more of such features. This is limited only to the extent that certain ones of such features are incompatible with other ones of such features in the sense that it would be impossible for a person of ordinary skill in the art to construct a practical embodiment that combines such incompatible features. Consequently, the description that "some embodiments" "another embodiment" or "still another embodiment" and so on possess feature A and "some embodiments" possess feature B should be interpreted as an express indication that the inventors also contemplate embodiments which combine features A and B (unless the description states otherwise or features A and B are fundamentally incompatible).

## Claims

1. A machining device (1) comprising a housing (2), a spindle (4) comprising at least one bearing and adapted to hold a component, a pulse shaft (11), an amplitude disc (8) coupled to the pulse shaft (11) and arranged concentric to it, the pulse shaft (11) defining an axial direction (AD), the amplitude disc (8) further comprising at least one recess (20), in which a sled (24) is arranged, the sled (24) having an irregularity (28), which comprises a concave part as seen in a plane defined by the amplitude disc (8), the machining device (1) further comprising at least one first elastic element (12a), a first motion link (14a) and a first embedding disc (10a) comprising at least one contact element (26), the first embedding disc (10a) being arranged concentric to the amplitude disc (8), the spindle (4) being coupled to the first embedding disc (10a), the first motion link (14a) being connected to the housing (2) and the first embedding disc (10a), the at least one first elastic element (12a) abutting the housing (2) with one end and the first embedding disc (10a) and/or the first motion link (14a) with the other end for pre-tensioning the first embedding disc (10a) towards the amplitude disc (8), wherein the contact element (26) of the first embedding disc (10a) is abutting the amplitude disc (8) and the irregularity (28) at least once per turn when the machining device is in use, so that a relative rotation between the amplitude disc (8) and the first embedding disc (10a) results in vibration in the spindle (4).

2. The machining device according to claim 1, wherein the sled (24) is arranged radially displaceable and has a longitudinal shape and wherein a cross section of the irregularity (28) is increasing or decreasing in the radial direction (RD) of the amplitude disc (8) and wherein a radial position of the sled (24) and therewith a point of contact between the irregularity (28) and the contact element (26) is changed when a radial position of the sled (24) is changed.

3. The machining device according to claim 2, wherein the irregularity (28) comprises a first part that is flush and parallel with the plane defined by the amplitude disc (8) and wherein the irregularity (28) comprises a second part that is concave and linearly increasing in the radial direction (RD) and away from the first part.

4. The machining device according to any of claim 1 to 3, further comprising a rotationally symmetric part (18) arranged at least partially around or at least partially within the pulse shaft (11), the rotationally symmetric part (18) having an increasing or decreasing diameter at least along a part of its length as measured in the axial direction (AD), and comprising at least one engagement structure (22) on its lateral surface, the rotationally symmetric part (18) being arranged displaceable along the axial direction (AD) and relative the amplitude disc (8) and wherein a free end of the sled (24) is projecting from the amplitude disc (8) in a radial direction for engagement in the engagement structure (22) of the rotationally symmetric part (18).

5. The machining device according to the previous claim, wherein the rotationally symmetric part (18) is shaped as a cone, preferably with a cut-off apex.

6. The machining device according to any of the previous claims 4 or 5, wherein the engagement structure (22) is a groove and shaped as dovetail and wherein the sled (24) comprises a correspondingly shaped free end that engages in the groove.

7. The machining device according to any of the previous claims, wherein the amplitude disc (8) comprises more than one recess (20) and more than one sled (24) and wherein the rotationally symmetric part (18) comprises a corresponding number of engagement structures (22) so that each sled (24) has an assigned engagement structure (22).

8. The machining device according to any of the previous claims, wherein the pulse shaft (11) is driven independently of the spindle (4).

9. The machining device according to the previous claim, further comprising a pulse shaft motor and a spindle motor, the pulse shaft motor being connected to the pulse shaft (11) for driving the pulse shaft (11) and the spindle motor being connected to the spindle (4) for driving the spindle (4) independently of the pulse shaft (11).

10. The machining device according to the previous claims 4 to 6, further comprising a bearing, a nut and a symmetric part shaft (6) comprising a thread on which thread the nut is arranged and on which nut the bearing is arranged, the symmetric part shaft (6) being connected to an amplitude motor and arranged in between the spindle (4) and the pulse shaft (11), wherein the bearing that is arranged on the nut is connected to the rotationally symmetric part (18) so that a rotation of the symmetric part shaft (6) leads to a displacement of the rotationally symmetric part (18) along the axial direction (AD).

11. The machining device according to the previous claim, wherein the rotationally symmetric part (18) comprises an amplitude motor arranged to rotate the sleeve for changing the position of the rotationally symmetric part (18) on the pulse shaft (11).

12. The machining device according to any of the previous claims, further comprising a second embedding disc (10b) comprising at least one contact element (26), at least one second elastic element (12b), a second motion link (14b) and a counterweight (16), the sled (24) of the amplitude disc (8) being designed symmetric versus a plane defined by the amplitude disc (8) and comprising at least two irregularities (28), one on each side of the amplitude disc (8), the second embedding disc (10b) being arranged concentric with the amplitude disc (8) and abutting the amplitude disc (8) with the contact element (26) on an opposite side of the first embedding disc (10a), the second motion link (14b) being connected to the housing (2), the second embedding disc (10b) and the counterweight (16), wherein the at least one second elastic element (12b) is arranged to abut the housing (2) with one end and the second embedding disc (10b), the second motion link (14b) and/or the counterweight (16) with the other end for pre-tensioning the second embedding disc (10b) towards the amplitude disc (8), wherein the contact element of the second embedding disc (10b) is abutting the amplitude disc (8) and the irregularity (28) at least once per turn when the machining device is in use, so that a relative rotation between the amplitude disc (8) and the second embedding disc (10b) results in a vibration in the counterweight (16).

13. The machining device according to any of the previous claims comprising a plurality of first elastic elements (12a) and/or second elastic elements (12b).

14. The machining device according to any of the previous claims, wherein each of the first embedding disc (10a) and/or second embedding disc (10b) comprises at least two contact elements (26) and the amplitude disc (8) comprises at least two irregularities (28) and wherein the number of contact elements (26) preferably corresponds to the number of irregularities (28).

15. The machining device according to any of the previous claims, wherein the contact element(s) (26) are bearings designed to roll on the amplitude disc (8) when the machining device is in use.

16. The machining device according to any of the previous claims, wherein the spindle (4) is adapted to hold the component, which is in the form of a drill, a milling tool or a blank.

17. The machining device according to any of the previous claims 12 to 16, comprising a third motion link (14c) and a fourth motion link (14d) wherein the third motion link (14b) connected to the housing (2) and directly or indirectly to the second embedding disc (10b) and wherein the fourth motion link (14d) is connected to the housing (2) and directly or indirectly to the first embedding disc (10a).

18. The machining device according to any of the previous claims, wherein any of the motion links (14a - 14d) described herein may be any of type of membrane (14a - 14d), laminated spring or linear guide.
